# EUROPEAN PATENT APPLICATION

(11) **EP 2 423 254 A1**
(43) Date of publication of application: **29.02.2012**
(21) Application number: 10767034.1
(22) Date of filing: 19.04.2010
(51) Int. Cl.: C08L 21/00, B65G 15/32, B65G 15/36, C08K 5/098, C08K 5/55, C08L 61/04

(54) **RUBBER COMPOSITION FOR CONVEYOR BELT, AND CONVEYOR BELT**

(30) Priority: 20.04.2009 JP 2009101586
(71) Applicant: Bridgestone Corporation, Tokyo 104-8340 (JP)
(72) Inventor: NAKANO Hiroki, Yokohama-shi Kanagawa 244-0812 (JP)
(74) Representative: Lamb, Martin John Carstairs
(86) International application number: PCT/JP2010/056916
(87) International publication number: WO 2010/122977

(57) **Abstract**

Disclosed is a rubber composition for a conveyor belt, which is **characterized by** containing 0.5-3 parts by weight of zinc dimethacrylate and 1.1-4.5 parts by weight of neodecanoic acid cobalt boride per 100 parts by weight of the rubber component. Also disclosed is a conveyor belt in which a galvanized steel cord that is covered with an adhesive rubber layer formed from the rubber composition is used as the core body. The rubber composition has excellent adhesion to a galvanized steel cord and good vulcanization rate. The conveyor belt using the rubber composition has excellent durability and productivity.

## Description

### TECHNICAL FIELD

The present invention relates to a rubber composition for conveyor belt which excels in adhesion to galvanized steel cords and has an adequate rate of vulcanization both required for efficient production of conveyor belts, and also to a conveyor belt formed with the rubber composition.

### BACKGROUND ART

Galvanized steel cords used as reinforcing materials used for rubber compositions are most suitable for reinforcing materials for conveyor belts reinforced with steel cords, working in a humid environment on account of their excellent corrosion resistance. Such galvanized steel cords are required to keep good adhesion to rubber for an extended period of time under humid conditions so that they ensure a long life for conveyor belts.

There have been proposed several methods for achieving good adhesion between rubber and galvanized steel cords, which involve incorporation of rubber component with rosin, an organic cobalt salt, and an organic chlorine compound in combination (Patent Document 1: JP-A 2006-312744), incorporation of rubber component with any one of triazine, zinc dimethacrylate, and zinc diacrylate, and an organic cobalt salt in combination (Patent Document 2: JP-A 2005-350491), or incorporation of rubber component with an acid-modified polymer and zinc dimethacrylate in combination (Patent Document 3: JP-A 2006-176580).

The foregoing conventional technologies permit improved adhesion between rubber and galvanized steel cords but suffer the disadvantage of decreasing in the rate of vulcanization owing to the presence of organic cobalt salt and zinc dimethacrylate, which is detrimental to mass production and productivity.

Consequently, there has been a demand of a new rubber composition for conveyor belt which exhibits good adhesion to galvanized steel cords and good durability in a severe working environment under humid and hot conditions and has an adequate rate of vulcanization which allows efficient mass production and productivity of conveyor belts.

### PRIOR ART DOCUMENTS

### PATENT DOCUMENTS

Patent Document 1: JP-A 2006-312744
Patent Document 2: JP-A 2005-350491
Patent Document 3: JP-A 2006-176580

### SUMMARY OF THE INVENTION

### PROBLEMS TO BE SOLVED BY THE INVENTION

The present invention was completed in view of the foregoing. It is an object of the present invention-tao provide a rubber composition for conveyor belt and also to a durable conveyor belt formed with the rubber composition. The rubber composition excels in adhesion to galvanized steel cords and has an adequate rate of vulcanization which allows efficient production of conveyor belts.

### MEANS FOR SOLVING THE PROBLEMS

As the result of comprehensive researches for solution to the above-mentioned problems, the present inventors found that not only it is possible to improve adhesion between rubber and galvanized steel cords but it is also possible to effectively increase the rate of vulcanization of rubber, thereby allowing efficient production of durable conveyor belts, if the organic cobalt salt to be added to rubber in combination with zinc dimethacrylate (for improved adhesion between rubber and galvanized steel cords) is cobalt neodecanoate boride in an adequate amount. This finding led to the present invention.

The present invention is directed to a rubber composition for conveyor belt which comprises 0.5 to 3 parts by weight of zinc dimethacrylate and 1.1 to 4.5 parts by weight of cobalt neodecanoate boride for 100 parts by weight of rubber component, and also to a conveyor belt of the type composed of covering rubber layers and a core of galvanized steel cords interposed between them which is coated with an adhesive rubber layer, wherein the adhesive rubber layer is formed from the rubber composition according to the present invention.

The present inventors' continued researches revealed that the rubber composition exhibits good adhesion if the rubber component is composed of natural rubber and synthetic rubber such as styrene-butadiene rubber (SBR) in an adequate ratio and also if the rubber composition is incorporated with any of phenolic resin particularly the one containing internally added hexamethylenetetramine, β-naphthol, and hexamethoxymethylated melamine (curing agent).

Thus, the present invention covers the preferred embodiments (1) to (7) specified below.
(1) The rubber composition for conveyor belt and the conveyor belt formed therewith according to the present invention, wherein the rubber component is composed of 1 to 10 parts by weight of natural rubber and 80 to 30 parts by weight of synthetic rubber such that their total amount is 100 parts by weight.
(2) The rubber composition for conveyor belt and the conveyor belt formed therewith as defined in (1) above, wherein the synthetic rubber is one or more species selected from styrene-butadiene rubber (SBR), butadiene rubber (BR), and isoprene rubber (IR).
(3) The rubber composition for conveyor belt and the conveyor belt formed therewith according to the present invention, which contains 1 to 10 parts by weight of phenolic resin for 100 parts by weight of the rubber component.
(4) The rubber composition for conveyor belt and the conveyor belt formed therewith as defined in (4) above, wherein the phenolic resin is the one which contains internally added hexamethylenetetramine.
(5) The rubber composition for conveyor belt and the conveyor belt formed therewith according to the present invention, which contains 1 to 10 parts by weight of β-naphthol for 100 parts by weight of the rubber component.
(6) The rubber composition for conveyor belt and the conveyor belt formed therewith according to the present invention, which contains 1 to 10 parts by weight of hexamethoxymethylated melamine and/or hexamethylenetetramine as a curing agent for 100 parts by weight of the rubber component.
(7) The conveyor belt of the type composed of covering rubber layers and a core of galvanized steel cords interposed between them which is coated with an adhesive rubber layer, wherein the adhesive rubber layer is formed from the rubber composition according to the present invention.

### ADVANTAGEOUS EFFECTS OF THE INVENTION

The rubber composition for conveyor belt according to the present invention excels in adhesion to galvanized steel cords and an adequate rate of vulcanization, both required for efficient production of durable conveyor belts.

### BRIEF DESCRIPTION OF DRAWING

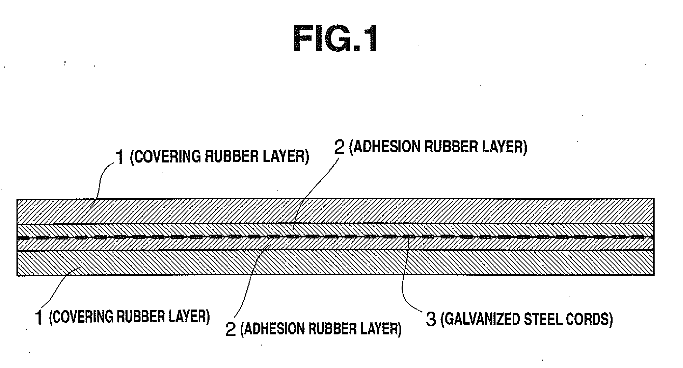

Fig. 1 is a schematic sectional view showing the specimen used for adhesion test in the example.

### EMBODIMENT FOR CARRYING OUT TIE INVENTION

The rubber composition for conveyor belt according to the present invention is characterized in containing 0.5 to 3 parts by weight zinc dimethacrylate and 1.1 to 4.5 parts by weight of cobalt neodecanoate boride for 100 parts by weight of rubber component.

The rubber component as the constituent of the rubber composition according to the present invention may be any known one that is used as the adhesive rubber layer for steel cords in conveyor belts. It may be natural rubber or a mixture of natural rubber and synthetic rubber.

Examples of the synthetic rubber are listed below. Polyisoprene rubber (IP), polybutadiene rubber (BR), and polychloroprene rubber, which are homopolymers of such conjugated diene compounds as isoprene, butadiene, and chloroprene; styrene-butadiene copolymer rubber (SBR), vinylpyridine-butadiene-styrene copolymer rubber, acrylo-nitrile-butadiene copolymer rubber, acrylic acid-butadiene copolymer rubber, methacrylic acid-butadiene copolymer rubber, methyl acrylate-butadiene copolymer rubber, and methyl methacrylate-copolymer rubber, which are copolymers of the above-mentioned conjugated diene compound with such vinyl compound as styrene, acrylonitrile, vinylpyridine, acrylic acid, methacrylic acid, alkyl acrylates, and alkyl methacrylates; copolymers [such as isobutylene-isoprene copolymer rubber (IIR)] formed from olefins, such as ethylene propylene, and isobutylene, and diene compounds; copolymer (EPDM) of olefins and non-conjugated diene [such as ethylene-propylene-cyclopentadiene terpolymer, ethylene-propylene-5-ethylidene-2-norbornene terpolymer, and ethylene-propyene-1,4-hexadiene terpolymer]; polyalkenamer [such as polypentenamer] resulting from ring opening polymerization of cycloolefin; rubber [such as polyepichlorohydrin rubber capable of vulcanization with sulfur] which results from ring opening polymerization of oxirane rings; and polypropyleneoxide rubber. Additional examples include halides of the foregoing rubbers, such as chlorinated isobutylene-isoprene copolymer rubber (Cl-IIR) and brominated isobutylene-isoprene copolymer rubber (Br-IIR). Another example is a ring-opening polymer of norbornene. The above-mentioned rubbers may be used by blending with a saturated elastomer such as epichlorohydrin rubber, polypropyleneoxide rubber, or chlorosulfonated polyethylene. Incidentally, preferable among the foregoing synthetic rubbers is styrene-butadiene copolymer rubber (SBR).

The rubber component may be formed from the natural rubber and the synthetic rubber in any ratio without specific restrictions. The amount of the natural rubber is usually 20 to 70 parts by weight and preferably 20 to 50 parts by weight, and the amount of the synthetic rubber is usually 80 to 30 parts by weight and preferably 80 to 50 parts by weight, with their total amount being 100 parts by weight.

According to the present invention, the rubber composition for conveyor belt contains zinc dimethacrylate in an amount of 0.5 to 3 parts by weight, preferably 0.5 to 2 parts by weight, for 100 parts by weight of the rubber component mentioned above. Addition of the zinc dimethacrylate is intended to improve adhesion to galvanized steel cords. With an amount less than 0.5 parts by weight, it does not improve adhesion as intended in the present invention. With an amount more than 3 parts by weight, it results in excessively slow vulcanization which is undesirable for rolling performance and efficient production intended by the present invention.

In addition, according to the present invention, the rubber composition for conveyor belt contains cobalt neodecanoate boride in an amount of 1.1 to 4.5 parts by weight, preferably 1.5 to 3.5 parts by weight, for 100 parts by weight of the rubber component mentioned above. The addition of the cobalt neodecanoate boride improves adhesion strength and increases the rate of vulcanization, thereby compensating for the decrease in the rate of vulcanization which is caused by the addition of the zinc dimethacrylate mentioned above. With an amount of addition of the cobalt neodecanoate boride less than 1.1 parts by weight, it does not sufficiently increase the rate of vulcanization as intended by the present invention, and with an amount more than 4.5 parts by weight, it adversely affects adhesion properties that depend on water resistance and thermal aging resistance.

According to the present invention, the cobalt neodecanoate boride mentioned above may be used in combination with cobalt stearate, so that the resulting rubber composition has adequate tackiness for improved rolling performance. The amount of the cobalt stearate is not specifically restricted. It is usually 0.5 to 4 parts by weight, preferably 0.5 to 2 parts by weight, for 100 parts by weight of the rubber component mentioned above. With an amount less than 0.5 parts by amount, it does not fully produce the effect of improving rolling performance by addition. With an amount more than 4 parts by weight, it adversely affects adhesion properties and tackiness, thereby deteriorating the step of bonding together the layers of covering rubber. The term "rolling performance" means processability for passing the kneaded rubber composition through sheeting rolls, thereby making it into belt-like rubber with a specific thickness and width.

The rubber composition according to the present invention may contain a phenolic resin in an amount adequate for further improvement in adhesion properties. Examples of the phenolic resin include phenol-formaldehyde resin, resorcinol-formaldehyde resin and cresol-formaldehyde resin, with the phenol-formaldehyde resin being preferable. The phenolic resin may be a pure one or a modified one such as natural resin-modified one and oil-modified one. Unrestrictive examples of the modified phenolic resin include the one with internally added hexamethylenetetramine (hexamine) or hexamethoxymethylated melamine (HMMM), which is preferable for improvement in adhesive properties, with the former being particularly desirable.

The phenolic resin may be added in any amount without specific restrictions. However, it should be added in an amount of 1 to 10 parts by weight, preferably 1 to 5 parts by weight, for 100 parts by weight of the rubber component. With an amount less than 1 part by weight, it does not fully produce its effect. With an amount more than 10 parts by weight, it adversely affects the physical properties of the rubber compound, which leads to sticking to the kneading machine and poor rolling performance, ending up with an increased production cost. Two or more phenolic resin may be used.

For further improvement in adhesion strength, the rubber composition may be incorporated with a hydroxyl group-containing monocyclic aromatic compound such as resorcinol or a hydroxyl group-containing polycyclic aromatic compound such as β-naphthol, with the latter being preferable. The amount of these compounds is not specifically restricted. It is usually 1 to 10 parts by weight, particularly 1 to 5 parts by weight, for 100 parts by weight of the rubber component. With an amount less than 1 part by weight, it does not fully produce its effect. With an amount more than 10 parts by weight, it deteriorates the physical properties of the rubber composition and it is wasted uneconomically. Incidentally, the β-naphthol should preferably be used in combination with hexamethoxymethylated melamine and/or hexamethylenetetramine as a curing agent which is mentioned later.

The rubber composition may also be incorporated with a curing agent for its further improvement in adhesion strength. The curing agent is a methylene donor, such as hexamethylenetetramine and methylolated melamine derivative, with the latter including hexamethylolated melamine, hexamethoxymethylated melamine, hexaethoxymethylated melamine, N,N',N"-trimethyl-N,N',N"-trimethylolated melamine, N,N',N"-trimethylolated melamine, N-methylolated melamine, N,N'-di(methoxymethylated)melamine and N,N',N"-tributyl-N,N',N"-trimethylolated melamine.
Preferable among these examples is either or both of hexamethoxymethylated melamine or hexamethylenetetramine, and they should preferably be used in combination with the β-naphthol mentioned above.

The curing agent may be used in any amount without specific restrictions. Usually it is used in an amount of 1 to 10 parts by weight, particularly 1 to 4 parts by weight, for 100 parts by weight of the rubber component. With an amount less than 1 part by weight, it does not fully produce its effect. With an amount more than 10 parts by weight, it is detrimental to the rubber properties and is wasted uneconomically.

The rubber composition of the present invention is usually incorporated with sulfur, organic sulfur compound, and any other vulcanizing agent in an unrestricted amount of 1 to 10 parts by weight, preferably 2 to 5 parts by weight, for 100 parts by weight of the rubber component. The vulcanizing agent may be used in combination with a vulcanization accelerator, such as zinc oxide and stearic acid, in an unrestricted amount of 1 to 20 parts by weight, preferably 3 to 15 parts by weight, for 100 parts by weight of the rubber component.

In addition, the rubber composition of the present invention may be incorporated with a variety of oils including paraffinic, naphthenic, or aromatic process oil, ethylene-α-olefin cooligomer, mineral oil such as paraffin wax and fluid paraffin, and vegetable oil such as castor oil, cotton seed oil, linseed oil, rapeseed oil, soybean oil, palm oil, coconut oil, and peanut oil. Preferable among these examples is aromatic process oil (aromatic oil). They are added in an unrestricted amount of 1 to 10 parts by weight, preferably 2 to 7 parts by weight, for 100 parts by weight of the rubber component. The rubber composition may also be incorporated with a filler, such as carbon black, silica, calcium carbonate, calcium sulfate, clay, and mica, in an adequate amount according to its intended use. Of these fillers, carbon black is particularly desirable.

The rubber composition of the present invention may optionally be incorporated with a variety of additives for rubber according to need in an amount not harmful to the object of the present invention. Such additives include vulcanization accelerator such as sulfenamide, age resistor, wax, antioxidant, foaming agent, plasticizer, lubricant, tackifier, and UV absorber.

The rubber composition for conveyor belt according to the present invention can be firmly bonded to galvanized steel cords when vulcanized in close contact with them. In practice, this is accomplished by heating under pressure two sheets of the rubber composition holding galvanized steel cords between them. Thus, the rubber composition can be bonded to and cover the galvanized steel cords. The condition of vulcanization varies depending on the vulcanizer and accelerator selected. Vulcanization with sulfur may be carried out at 135 to 180°C for 10 to 100 minutes.

The conveyor belt formed with the rubber composition according to the present invention is not specifically restricted in its structure. It is usually constructed of a core layer and covering rubber layers holding it between them. The core layer includes galvanized steel cords and the rubber composition of the present invention holding them therein. The galvanized steel cords and the covering rubber layers are not specifically restricted in form and composition, respectively. Any known form and composition may be properly selected according to the use of the conveyor belt.

### EXAMPLES

The invention will be described below in more detail with reference to Examples and Comparative Examples, which are not intended to restrict the scope thereof. The terms "parts" and "%" used in the examples imply "parts by weight" and "wt%," respectively.

### Examples 1 to 13 and Comparative Examples 1 to 13

These examples are designed to produce samples of rubber compositions according to the formulation shown in Tables 1 and 2 given below and then test them for adhesion to galvanized steel cords, rate of vulcanization, rolling performance, and laminating performance. The results are shown in Tables 1 and 2.

The components shown in Tables 1 and 2 are commercial products whose sources and trade names are listed below.
- Natural rubber: RSS #3
- Styrene-butadiene rubber: JSR Corp., "SBR 1500" (SBR produced by emulsion polymerization)
- Carbon black: Asahi Carbon Co., Ltd., "#70"
- Age resistor: Sumitomo Chemical Co., Ltd., "ANTIGENE 6C"
- Aromatic oil: Idemitsu Kosan Co., Ltd., "Diana Process Oil AH-85"
- Sulfur: Tsurumi Chemical Industry Co., Ltd., "Z Sulfur"
- Vulcanization accelerator: Ouchi Shinko Chemical Industrial Co., Ltd., "Nocceler NS-F"
- Zinc oxide: Toho Zinc Co., Ltd., "Ginrei SR"
- Zinc dimethacrylate: Kawaguchi Chemical Industry Co., Ltd., "Actor ZMA"
- Cobalt neodecanoate: DIC Corporation, "Cobalt Versatate"
- Cobalt neodecanoate boride: DIC Corporation, "DICNATE NBC II"
- Cobalt naphthenate: DIC Corporation, "Cobalt naphthenate"
- Cobalt stearate: DIC Corporation, "Cobalt Stearate"
- Phenolic Resin-1: Sumitomo Bakelite Co., Ltd., "Sumilite Resin PR 50235"
- Phenolic Resin-2 (with internally added hexamethylenetetramine): Sumitomo Bakelite Co., Ltd., "Sumilite Resin PR-12687"
- β-Naphthol: Mitsui Fine Chemical Inc., "2-naphthol"
- Hexamethoxymethylated melamine: Nihon Cytec Industries Inc., "CYREZ964RPC"

### (1) Adhesion test

### a. Preparation of specimens

The rubber composition for each Example was prepared by kneading the components shown in Tables 1 and 2 all at once in a Bumbary mixer. The resulting rubber composition was made into a sheet (15 mm thick). A galvanized steel cord (7 mm in diameter) was sandwiched by a pair of sheets, and the resulting assembly was heated under pressure for vulcanization at 170°C for 40 minutes. Thus there was obtained the specimen for test.

### b. Initial adhesion strength

The specimen was tested for adhesion strength by measuring the power required for the galvanized steel cord to be pulled out from it. This test accords with DIN 2231. The results of the test are expressed in terms of index, with the value in Comparative Example 4 being 100. The adhesion strength is proportional to the index value.

### c. Adhesion strength after heat aging

The same test as above was repeated for the specimen which had experienced heat aging at 145°C for 300 minutes under pressure (2 MPa) exerted by a press.

### d. Adhesion strength after moisture absorption

The same test as above was repeated for the specimen which had been allowed to stand at 70°C and 95% RH for 90 days.

### (2) Rate of vulcanization

The specimen was tested for the rate of vulcanization at 155°C in cure time of Tc(90) according to JIS K6300-2 by using "Curelastometer, type W" made by Nichigo Shoji Co., Ltd. The results of the test are expressed in terms of index, with the value in Comparative Example 4 being 100. The smaller the measured value of Tc(90), the larger the index value.

### (3) Rolling performance

A sample weighing 500 g, which was taken from the rubber composition (unvulcanized), underwent rolling for three minutes on "RII-2CC" (made by Kodaira Seisakusho Co., Ltd.) so that it was made into a 3 mm thick sheet. During rolling operation, the sample was examined for its tackiness to the roll surface. The tackiness was rated as good (⊚), fair (○), and poor (×).

### (4) Laminating performance

The test for laminating performance was performed on an unvulcanized rubber laminated body as a specimen simulating the conveyor belt as shown in Fig. 1, which was produced in the following manner. First, a rubber composition based on the formulation shown below was prepared by kneading in a Bumbary mixer. This rubber composition was made into the covering sheet 1 (4 mm thick). Then, each of the rubber compositions prepared according to the formulations shown in Tables 1 and 2 was made into the adhesion rubber layer 2 (2 mm thick). Two pieces of the adhesion rubber layer 2 were placed on top of the other, with the galvanized steel cords 3 (4 mm in diameter) interposed between them. The resulting laminate product was held between two pieces of the covering sheet 1, and the resulting assembly was pressed by a hand roller so that the individual layers are bonded together.

### (Formulation for covering rubber composition)

| | | |
|---|---|---|
| Natural rubber (RSS #3) | 70 | pbw |
| Styrene-butadiene rubber (SBR 1500, from JSR Corp.) | 30 | pbw |
| HAF carbon | 55 | pbw |
| Stearic acid (Kao Corp., "LUNAC RA") | 2 | pbw |
| ZnO | 3 | pbw |
| Wax (Ouchi Shinko Chemical Industrial Co., Ltd., "Sunnoc N") | 2 | pbw |
| Age resistor RD (Kawaguchi Chemical Industry Co., Ltd., "Antage RD") | 0.5 | pbw |
| Age resistor 6C (Kawaguchi Chemical Industry Co., Ltd., "Antage 6C") | 0.5 | pbw |
| Aromatic oil (Idemitsu Kosan Co., Ltd., "Diana Process Oil AH-85") | 5 | pbw |
| Sulfur | 2 | pbw |
| Vulcanization accelerator (Ouchi Shinko Chemical Industrial Co., Ltd., "Nocceler NS-F") | 0.7 | pbw |

Each specimen thus obtained was peeled off by force at the interface between the covering rubber layer and the adhesion rubber layer. The adhesiveness of the layers was rated as good (O) and poor (△) depending on whether they have sufficient bond strength or not.

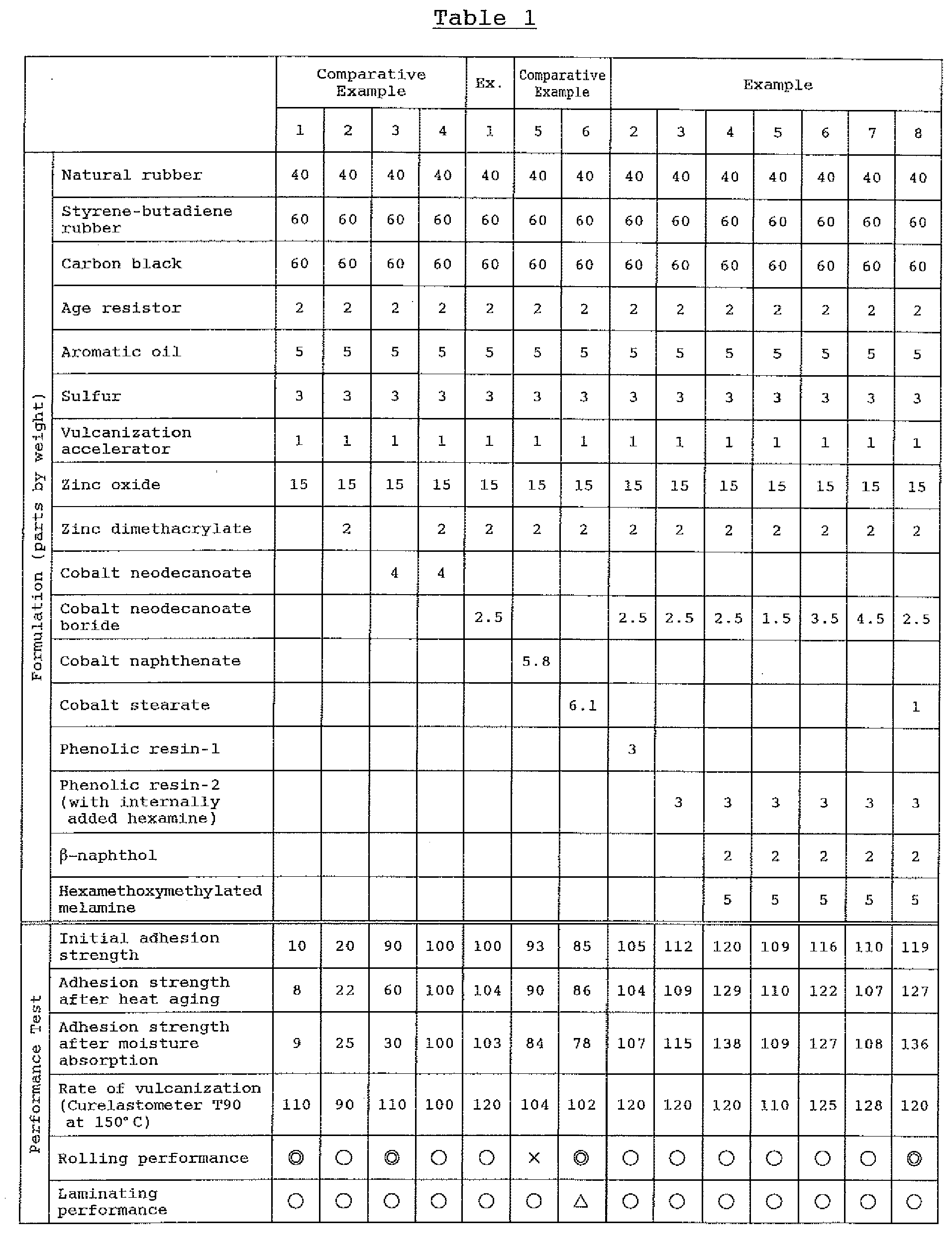

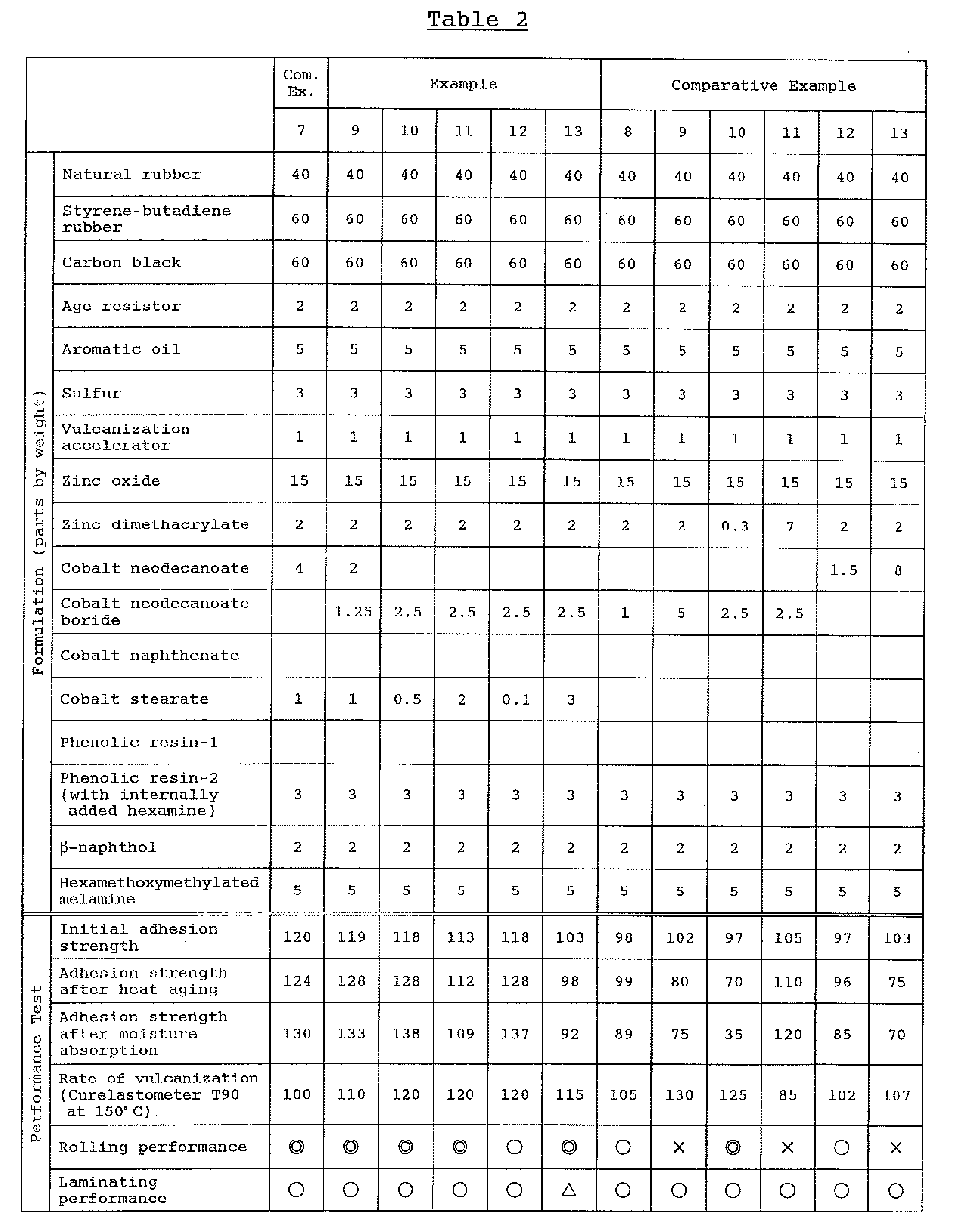

It is apparent from Tables 1 and 2 that the rubber composition for conveyor belt according to the present invention exhibits good adhesion to galvanized steel cords and achieves vulcanization at an adequate rate, so that it firmly adheres to galvanized steel cords without retarding the rate of vulcanization, and hence it permits efficient production of durable conveyor belts.

### EXPLANATION OF REFERENCE NUMERALS

1 Covering rubber layer
2 Adhesive rubber layer
3 Galvanized steel cords

## Claims

1. A rubber composition for conveyor belt which comprises 0.5 to 3 parts by weight of zinc dimethacrylate and 1.1 to 4.5 parts by weight of cobalt neodecanoate boride for 100 parts by weight of rubber component.

2. The rubber composition for conveyor belt as defined in claim 1, in which the rubber component is composed of 20 to 70 parts by weight of natural rubber and 80 to 30 parts by weight of synthetic rubber such that their total amount is 100 parts by weight.

3. The rubber composition for conveyor belt as defined in claim 2, in which said synthetic rubber is one or more species selected from styrene-butadiene rubber (SBR), butadiene rubber (BR), and isoprene rubber (IR).

4. The rubber composition for conveyor belt as defined in any one of claims 1 to 3, which further contains 1 to 10 parts by weight of phenolic resin for 100 parts by weight of the rubber component.

5. The rubber composition for conveyor belt as defined in claim 4, in which the phenolic resin is one which contains internally added hexamethylenetetramine.

6. The rubber composition for conveyor belt as defined in any one of claims 1 to 5, which further contains 1 to 10 parts by weight of β-naphthol for 100 parts by weight of the rubber component.

7. The rubber composition for conveyor belt as defined in any one of claims 1 to 6, which further contains 1 to 10 parts by weight of hexamethoxymethylated melamine and/or hexamethylenetetramine as a curing agent for 100 parts by weight of the rubber component.

8. A conveyor belt of the type composed of covering rubber layers and a core of galvanized steel cords interposed between them which is coated with an adhesive rubber layer, wherein said adhesive rubber layer is formed from the rubber composition defined in any one of claims 1 to 7.
